Europäisches Patentamt

European Patent Office

Office européen des brevets

(19)

(11) Veröffentlichungsnummer: **0 203 275**
**A2**

## EUROPÄISCHE PATENTANMELDUNG

(12)

(21) Anmeldenummer: **86102705.0**

(22) Anmeldetag: **01.03.86**

(51) Int. Cl.⁴: **G 01 P 13/02**, G 01 P 3/481, G 01 D 5/243

(30) Priorität: **23.03.85 DE 3510651**

(43) Veröffentlichungstag der Anmeldung: **03.12.86**
**Patentblatt 86/49**

(84) Benannte Vertragsstaaten: **BE DE FR GB IT NL**

(71) Anmelder: **ROBERT BOSCH GMBH, Postfach 50, D-7000 Stuttgart 1 (DE)**

(72) Erfinder: **Hauler, Peter, Merkurweg 4, D-7505 Ettlingen 5 (DE)**
Erfinder: **Zabler, Erich, Dr., Brunhildstrasse 11, D-7513 Stutensee (DE)**

(54) **Inkrementaler Weggeber.**

(57) Inkrementaler Weggeber, insbesondere Drehwinkelsensor hoher Auflösung, bei dem einem Inkrementrad mit gebrochener Umfangsstruktur (Zahnung) eine auf die Strukturänderung mit einer Änderung ihrer Ausgangsspannung reagierende Sensoreinheit im vorgegebenen Abstand berührungsfrei gegenüberliegt. Die Sensoreinheit umfaßt zwei Sensorsysteme, die zueinander um eine viertel Periode der elektrischen Ausgangssignale räumlich versetzt sind oder die bei gleicher Umfangslage entsprechend räumlich versetzte Rotorstrukturbereiche abtasten, wobei die in eine Rechteckwellenform umgewandelten Ausgangssignale der beiden Sensorsysteme durch eine Gatterschaltung (exklusives ODER) so miteinander verknüpft werden, daß sich die doppelte Impulszahl bei sonst beibehaltenen räumlichen Abmessungen ergibt.

EP 0 203 275 A2

0203275

19929
1838/ot/mü
07.01.1985
Schäfer

ROBERT BOSCH GMBH, 7000 Stuttgart 1

Inkrementaler Weggeber

Stand der Technik

Die Erfindung geht aus von einem inkrementalen Weggeber nach
der Gattung des Hauptanspruchs. Die Erfindung kann allgemein
bei der inkrementalen Wegmessung oder Drehwinkelmessung eingesetzt werden, wobei einem Rotor mit sich in Wegrichtung ändernder, also gebrochener Oberflächenstruktur, der sich auch
geradlinig fortbewegen kann, ein Sensor gegenüberliegt, der auf
die Oberflächenstrukturänderung mit einer Änderung der von ihm
abgegebenen Ausgangsspannung reagiert. Da die Erfindung sich
für die Anwendung in Verbindung mit magnetoresistiven Differentialsensoren bevorzugt eignet, werden bekannte Systeme dieser Art
im folgenden erläutert. Der Aufbau solcher aus magnetfeldabhängigen Widerständen bestehender und daher als sogenannte Feldplatten-Differentialsensoren bezeichnete Sensorsysteme ist üblicherweise so, daß   zwei   magnetfeldabhängige  Widerstände in

/2

Reihe an eine Gleichspannungsquelle angeschlossen und am Verbindungspunkt der Widerstände die jeweilige Sensorausgangsspannung abgegeben wird (siehe Siemens-Datenbuch Band 1 "Sensoren", Seiten 60-69).

Ein solchermaßen aufgebauter Feldplatten-Differentialsensor eignet sich vorzugsweise zur Abtastung von Zahnradstrukturen und daher insbesondere zur Drehwinkelerfassung, auch Drehgeschwindigkeitsmessung, wobei das Auflösungsvermögen eines so gebildeten inkrementalen Drehwinkelsensors, aber auch aus anderen Grundelementen bestehender Drehwinkelsensoren auf induktiver oder kapazitiver Meßgrundlage, entscheidend vom **Abstand Aufnehmer-Inkrementrad** (beispielsweise also Zahnrad) abhängt. Üblicherweise sind der maximal zulässige Durchmesser des jeweiligen Gebers oder Inkrementrades sowie die pro Umdrehung mindestens von dem Sensor abzugebende Pulszahl vorgeschrieben, was zu einer Diskrepanz zwischen den Anforderungen und der Realisierbarkeit mit bekannten Sensormitteln führt, wenn man, beispielsweise für einen Kraftfahrzeug-ABS-Radsensor einen Luftspalt vorgegebener Größe, beispielsweise 4 mm, fordert, aufgrund der Gegebenheiten der beteiligten Komponenten zur Sicherstellung einer einwandfreien Funktion aber nur wesentlich geringere Luftspalte (ca. 2 mm) höchstens realisierbar sind. Dabei kann von einem Erfahrungswert für magnetische Sensorsysteme ausgegangen werden, der eine Beziehung zwischen der Inkrementweite W (beispielsweise also bei einem Inkrementrad dem Zahnabstand ZA) und dem maximal realisierbaren Luftspalt, also Abstand zu den magnetfeldempfindlichen Bereichen des Sensors angibt. Dieser Erfahrungswert liegt bei Luftspalt $LS = W/3$. Ange-

/3

19929 0203275

wendet auf das obige Beispiels beispielsweise eines ABS-Radsensors mit zulässigem Durchmesser des Inkrementrades in numerischen Werten von 190 mm und der pro Umdrehung mindestens abzugebenden Pulszahl von 100 ergibt sich bei einem Zahnabstand von 6 mm lediglich die Möglichkeit eines maximalen Luftspalts von 2 mm, was einer ursprünglichen Forderung von 4 mm nicht gerecht wird.

Der vorliegenden Erfindung liegt daher die Aufgabe zugrunde, das Auflösungsvermögen eines solchen inkrementalen Weggebers, vorzugsweise Drehwinkelsensors entscheidend zu verbessern, so daß sich bei Beibehaltung der jeweiligen Impulszahl die Möglichkeit ergibt, den Abstand zwischen Aufnahmer und Rotor (Inkrementrad) zu vergrößern, oder jedenfalls hier größere Abstände zuzulassen.

Vorteile der Erfindung

Der erfindungsgemäße Weggeber löst diese Aufgabe mit den kennzeichnenden Merkmalen des Hauptanspruchs und hat den Vorteil, daß die Auflösung entscheidend verbessert wird, so daß entweder durch Zugrundelegung gröberer Umfangsstrukturen des Rotors oder Inkrementrades bei gleicher spezifischer Impulszahl der Abstand oder Luftspalt entsprechend vergrößert werden kann, oder bei Beibehaltung der jeweiligen geometrischen Gegebenheiten und bei Zugrundelegung von mindestens zwei Sensorsystemen ein entsprechend doppelt so hohes Auflösungsvermögen erzielt werden kann.

Die Erfindung ist gleichermaßen gut einsetzbar bei geradverzahnten

/4

Stirnrädern oder auch Stirnrädern mit Schrägverzahnung, wobei in diesem Fall die beiden Sensorsysteme unter Erzielung einer besonders geringen Ausdehnung in Umfangs- oder Bewegungsrichtung des Rotors oder Inkrementrades aufeinander ausgerichtet über- oder untereinander angeordnet werden können.

Durch die in den Unteransprüchen aufgeführten Maßnahmen sind vorteilhafte Weiterbildungen und Verbesserungen des im Hauptanspruch angegebenen Weggebers möglich. Besonders vorteilhaft läßt sich die Erfindung zur Geschwindigkeitsmessung bei niedrigsten Drehzahlen einsetzen, wobei auch in der Zeit zwischen den inkrementalen Nulldurchgängen ein gutes Maß der jeweiligen Momentangeschwindigkeit gewonnen werden kann.

Schließlich läßt sich durch die Art der Signalgewinnung bei vorliegender Erfindung, nämlich durch die Anordnung mindestens zweier getrennter, gegebenenfalls auch unterschiedlicher Sensorsysteme eine klare Unterscheidung zwischen einer Vorwärts- oder einer Rückwärtsbewegung des Rotors oder Inkrementrades treffen und in Form eines hoch oder nieder liegenden Ausgangssignals anzeigen.

Zeichnung

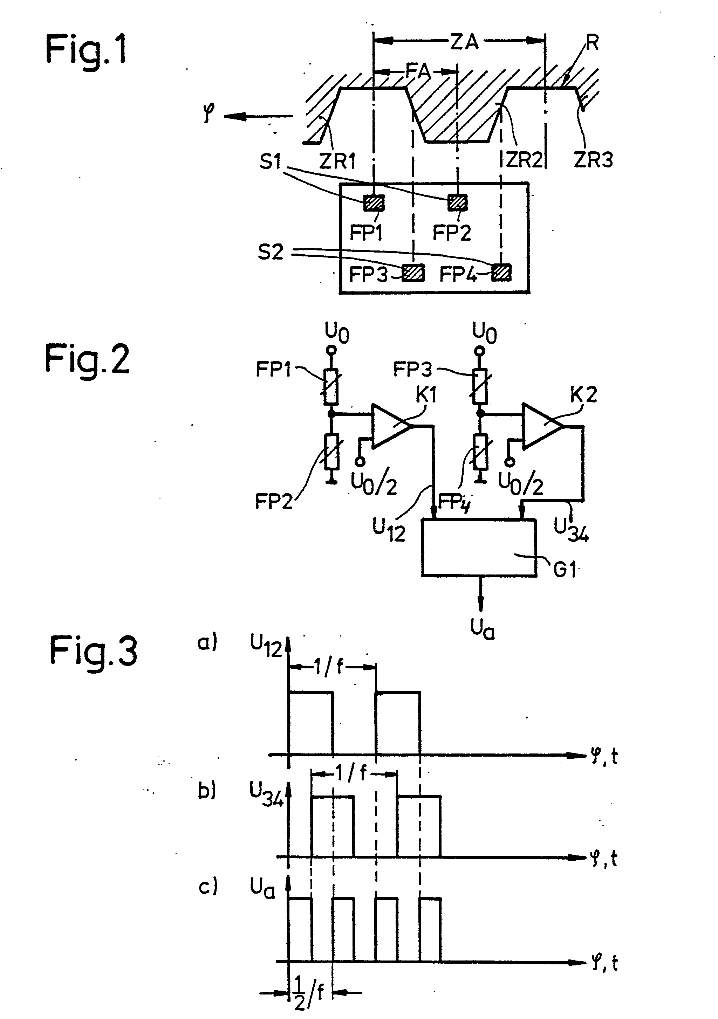

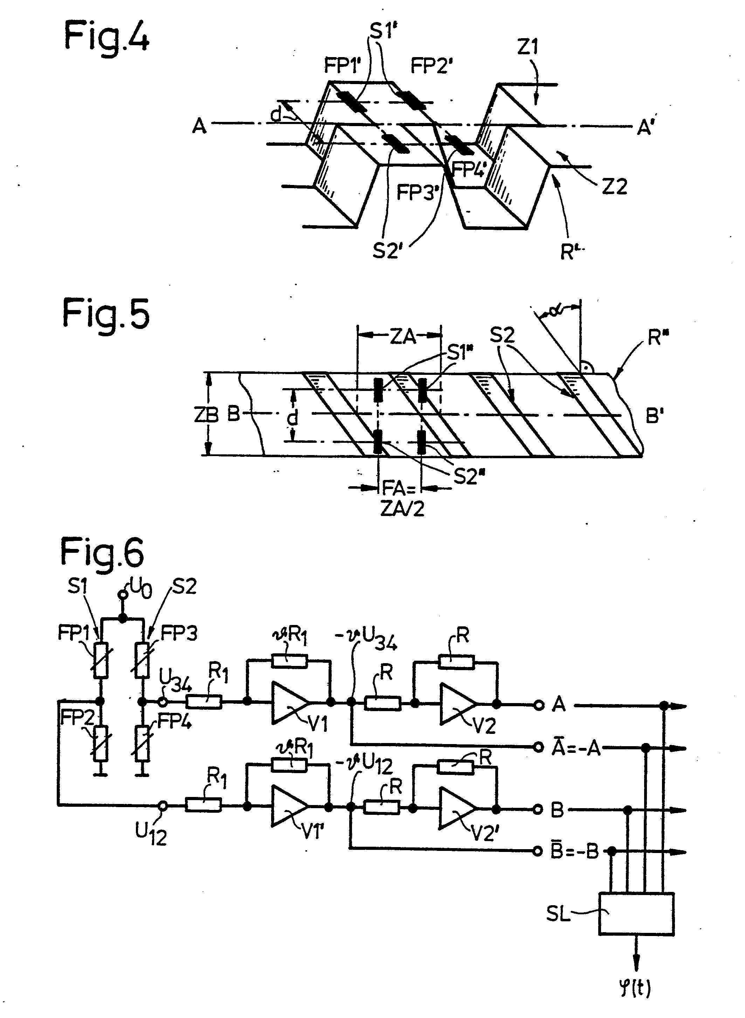

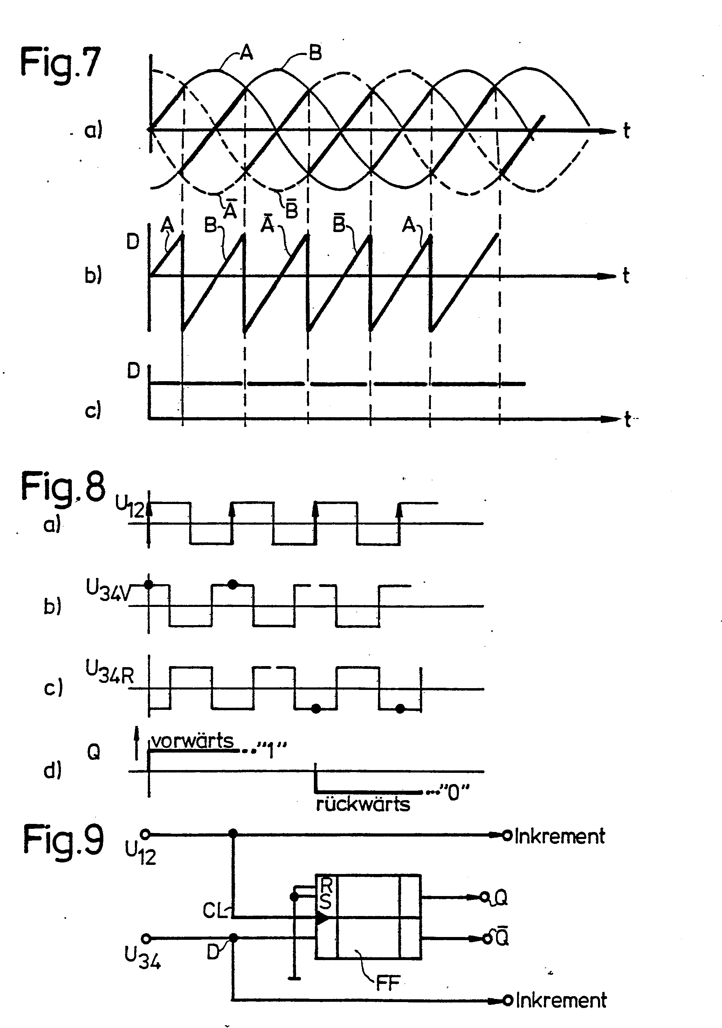

Ausführungsbeispiele der Erfindung sind in der Zeichnung dargestellt und werden in der nachfolgenden Beschreibung näher erläutert. Es zeigen Fig. 1 stark schematisiert im Ausschnitt Struktur und Zuordnung von Weggeber (Inkrementrad) und Sensorsystemen, Fig. 2 ein mögliches Ausführungsbeispiel einer elektrischen oder

/5

elektronischen Auswerteschaltung der von den Sensoren gelieferten Ausgangssignale und Fig. 3 verschiedene Spannungsverläufe von Sensorausgangssignalen sowie der gemeinsamen, durch Verknüpfung gewonnen Ausgangsspannung. Fig. 4 zeigt als weiteres Ausführungsbeispiel die Variante aufeinander ausgerichteter Sensorsysteme bei in Bewegungsrichtung versetzten Rotorstrukturen, desgleichen die Fig. 5, bei der die Rotorstruktur aus einer Schrägverzahnung besteht, während die Fig. 6 ein weiteres Ausführungsbeispiel der Erfindung zur Geschwindigkeitsmessung bei niedrigsten Drehzahlen als Schaltbild zeigt und die Fig. 7 Spannungsverläufe über der Zeit, wie sie sich an verschiedenen Schaltungspunkten der Fig. 6 ergeben. Schließlich zeigen die Fig. 8 und 9 noch eine Einsatzmöglichkeit der Erfindung zur Richtungserkennung der Relativbewegung zwischen Rotor (Inkrementrad) und Sensoreinheit.

Beschreibung der Ausführungsbeispiele

Die Erfindung beruht auf der Erkenntnis, daß eine gröbere Gestaltung der Umfangsstrukturen des Inkrementrades, wie der jeweilige Weggeber oder Rotor im folgenden ausschließlich noch bezeichnet werden soll, zwar zunächst (scheinbar) eine Reduzierung der abgegebenen spezifischen Impulszahl zur Folge hat, andererseits aber solche gröbere Umfangsstrukturen auch mit größerem Abstand des Aufnehmers oder Sensors vom Inkrementrad abgetastet werden können; so kann man beispielsweise damit rechnen, daß bei einer Verdoppelung des Zahnabstandes ZA (oder allgemein der Inkrementweite W) auch etwa eine Verdoppelung des möglichen Sensorabstandes zum Inkrementrad, also des Luftspaltes, erreichbar ist.

/6

Der weiterführende Schritt bei vorliegender Erfindung besteht dann darin, daß zur Vermeidung einer entsprechenden Halbierung der erzielbaren Impulszahl etwa pro Umdrehung des Inkrementrades (bei gleichem Raddurchmesser) ein zweites Sensorsystem zur Erhaltung der ursprünglichen Impulszahl eingesetzt wird, und zwar so in seiner Positionierung am Umfang des Inkrementrades, daß sein Ausgangssignal gegenüber dem ersten Sensorsystem um eine viertel Periode ($\pi/2$) versetzt ist. Wie weiter unten noch ausführlich erläutert, läßt sich eine solche Versetzung der jeweiligen Ausgangssignale der Sensorsysteme auch bei paralleler Ausrichtung der Sensorsysteme zueinander durch eine entsprechend versetzte Umfangsstruktur des Inkrementrades erzielen.

Es sei darauf hingewiesen, daß die Erfindung nicht auf die Anwendung von magnetostriktiven Differentialsensoren, also auf mit Feldplattenwiderständen arbeitenden Aufnehmern beschränkt ist, sondern grundsätzlich beliebige Sensoren Verwendung finden können, deren Ausgangssignale, abgestimmt auf die sich ändernde geometrische Struktur des Inkrementrades, eine entsprechende Änderung ihrer Ausgangssignalspannung zeigen. Es ist auch möglich, für die Erfindung an einer Stelle einen Feldplattenwiderstand-Differentialsensor zu verwenden und an anderer Stelle, diesem zugeordnet und um die jeweilige viertel Periode versetzt, ein Sensorpaar unterschiedlicher Funktionen anzuordnen.

Die im folgenden im Detail angegebenen Erläuterungen der Erfindung beschränkt diese daher nicht auf die Anwendung magnetfeldabhängiger Widerstände im Sensorbereich.

In der schematischen Darstellung der Fig. 1 ist ein erster Feldplatten-Differentialsensor S1, dargestellt durch das Feldplattenpaar FP1
und FP2, sowie ein zweiter Feldplatten-Differentialsensor S2, dargestellt durch das Feldplattenpaar FP3 und FP4 vorgesehen und vorzugsweise im gleichen Gehäuse angeordnet, was problemlos möglich
ist. Dabei ist der aus dem zweiten Feldplattenpaar FP3 und FP4
bestehende zweite Sensor S2 (oder das zweite Sensorsystem) um
eine viertel Periode, bezogen auf die geometrische Struktur des
Inkrementrades also um den vierten Teil des Zahnabstandes ZA,
zueinander versetzt angeordnet, wobei der Abstand der jeweils ein
Feldplattenpaar zueinander bildenden Feldplattenwiderstände, wie
bei solchen Differentialsensoren üblich, den halben Zahnabstand FA
beträgt. In Fig. 1 ist das nur teilweise dargestellte Inkrementrad
mit R, die von diesem gebildeten und dem gesamten Sensorbereich
gegenüberliegenden Zähne mit ZR1, ZR2, ZR3 ... bezeichnet.

Wie die Darstellung der Fig. 2 zeigt, sind die beiden, jeweils ein
Sensorsystem S1, S2 bildenden Feldplattenwiderstände elektrisch
in Reihe geschaltet und liegen an einer Versorgungsspannung Uo,
wobei die Verbindung der beiden Feldplattenwiderstände jeweils
mit dem einen Eingang eines nachgeschalteten Komparators K verbunden ist, dessen anderem Eingang die halbe Versorgungsspannung
Uo/2 zugeführt ist. Durch diese einfache Schaltung lassen sich die
von dem jeweiligen Sensor S1, S2 abgegriffenen und normalerweise
sinusförmigen Spannungen in Rechtecksignale umsetzen, wobei deren Wiederholrate zunächst nur der Hälfte der anfangs vorausgesetzten, erforderlichen Impulszahl entspricht, wie ohne weiteres
einzusehen und wie auch bei a) und bei b) in Fig. 3 in Form von

/8

Kurvenverläufen angegeben ist. Dabei stellt die Spannung $U_{12}$ die vom Komparator K1 für den Sensor S1 und die Spannung $U_{34}$ die vom Komparator K2 für den Sensor S2 jeweils abgegebene Sensoreinzelspannung dar, deren Verläufe bei a) und b) über den Drehwinkel des Inkrementrades bzw. über der Zeit aufgetragen sind. Der versetzte Spannungsverlauf der beiden bereits digital vorliegenden Einzelausgangsspannungen $U_{12}$ und $U_{34}$ um eine viertel Periode über dem Drehwinkel $\varphi$ bzw. über der Zeit ermöglicht jetzt deren Verknüpfung zu einer gemeinsamen Signalausgangsspannung mit Hilfe einer Gatterschaltung G1, die so ausgebildet ist, daß nur dann die Signalausgangsspannung Ua am Gatterausgang gebildet wird, wenn nur jeweils die eine oder die andere Spannung hochliegt; bei gleichzeitig hochliegenden Signalen ergibt sich am Ausgang der Gatterschaltung G1 niederliegendes oder Null-Signal. Ein solches Gatter läßt sich am besten als EXCLUSIV-ODER-Schaltung realisieren oder durch jede andere, eine entsprechende Signalverknüpfung ermöglichende Logikschaltung. Man erkennt, daß man auf diese Weise, wie bei c) in Fig. 3 dargestellt, jetzt die doppelte, also die gewünschte Impulszahl pro Umdrehung trotz gröberer Umfangsstruktur (größerem Zahnabstand ZA) des Inkrementrades erhält.

Die Komparatoren K1, K2 und das die beiden Ausgangsspannungen verknüpfende Gatter (EXCLUSIV-ODER-Schaltung) können vor Ort direkt beim Sensor angebracht sein, so daß insgesamt nur drei Leitungen erforderlich sind, nämlich für    +Uo, Masse und Signal Ua. Sind die elektronischen Baukomponenten in einem weiter entfernten Schaltgerät untergebracht, dann benötigt man für das Sensorgehäuse vier Leitungen, nämlich +Uo, Masse, Signal $U_{12}$, Signal $U_{34}$.

Da es entsprechend vorliegender Erfindung lediglich auf die Viertelperioden-Versetzung der Einzelausgangssignale ankommt, können,
wie in Fig. 4 dargestellt, anstelle der zueinander versetzt angebrachten beiden Differentialsensoren S1, S2 die beiden Sensoren S1'
und S2' auch auf gleicher Umfangslage, also mit ihren Feldplatten
FP1', FP2' bzw. FP3', FP4' zueinander ausgerichtet, das abgetastete Inkrementrad R' jedoch in Umfangs- bzw. Drehrichtung bei
zueinander versetzte Strukturen aufweisen , beispielsweise also
um einen viertel Zahnabstand zueinander versetzte Zahnabfolgen Z1
und Z2. Bei einer solchen Ausbildung sind die Abmessungen des
gesamten Sensorbereichs in Umfangsrichtung geringer.

Eine dritte Variante zur Erzielung der erforderlichen Viertelperioden-Versetzung ist in Fig. 5 dargestellt und besteht in der Verwendung einer Schrägverzahnung SZ des Inkrementrades R'', wobei die
jeweiligen Feldplatten-Widerstandspaare der Sensoren S1'' bzw. S2''
wiederum auf gleicher Umfangslage angeordnet sein können, zueinander jedoch einen axialen Abstand d aufweisen, der folgender Beziehung folgt:

$$\tan \alpha \; = \; \frac{ZA/2}{d} \; ,$$

wobei $\alpha$ der Schrägwinkel der Verzahnung ist.

Bei der geteilten Inkrementrad-Struktur entsprechend Fig. 4 ist
es erforderlich, die den Gesamtsensor bildenden Feldplatten einigermaßen in der Mittenlage zur Trennlinie A-A' zu halten, während
bei der in Fig. 5 gezeigten Schrägverzahnung die Position der den jeweiligen Differentialsensor bildenden Feldplatten-Widerstände
- unter Einhaltung des Abstandes zueinander - über die gesamte
axiale Zahnbreite ZB verschoben werden kann, ohne daß eine Verfälschung des Ausgangssignals eintritt. Es ist auch nicht auszuschließen, daß Schrägverzahnungen günstiger herstellbar oder jedenfalls an geeigneten Stellen zur Messung verfügbar sind als versetzte Zahnstrukturen entsprechend Fig. 4.

Es versteht sich, daß das Grundprinzip vorliegender Erfindung auch
auf andere Inkrementgeber oder Weggeber als die bisher dargestellten radialverzahnten Inkrementräder angewendet werden kann. Das
gleiche Grundprinzip ist einsetzbar bei planaren Zahnstrukturen,
wie sie vielfach bei ABS-Systemen auftreten, bei Schlitz- oder Lochscheiben, Hohlrädern u.dgl. Dabei ist, wie eingangs schon erwähnt,
das erfindungsgemäße Meßverfahren vom Aufnehmerprinzip unabhängig, so daß anstelle der dargestellten Feldplattensensoren beispielsweise auch, um nur einige zu nennen, Permalloy-, Hall-,
Induktiv- und andere Sensoren angewendet werden können. Da lediglich die geometrische Versetzung um eine viertel Periode erforderlich ist, müssen die beiden Sensoren oder Sensorsysteme auch nicht
unbedingt in einem gemeinsamen Gehäuse an der gleichen Umfangsstelle des Inkrementrades angebracht sein; aufgrund der gegebenen
Periodizität der Umfangsstruktur kann eine Verschiebung um eine
viertel Periode der beiden Sensorsignale auch erzielt werden, wenn
die Sensoren, jeder für sich jeweils als Differentialsensor vorzugsweise ausgebildet, an weit entfernten Positionen des Umfangs angebracht sind, aber immer so, daß die Viertelperioden-Verschiebung
realisiert ist. Eine solche Ausbildung kann im Falle sehr kleiner

/11

Räder und großer Raumnot auch zweckmäßig sein, beispielsweise bei Zündverteilern u. dgl.

Ein weiteres bevorzugtes Einsatzgebiet für vorliegende Erfindung betrifft die Möglichkeit einer Geschwindigkeitsmessung bei niedrigen und niedrigsten Drehzahlen. Solche. Messungen werden beispielsweise bei sehr niedrigen Drehzahlen zum Ermitteln der Drehgeschwindigkeit für die Abstände der Signal-Nulldurchgänge ausgewertet, beispielsweise also ausgezählt, wie dies üblicherweise der Fall ist; dabei ergibt sich das Problem gegebenenfalls wesentlich zu langer Meßzeiten, da zwischen jeweils zwei Nulldurchgängen keine neuen Informationen entstehen.

Unter Zugrundelegung des erfindungsgemäßen Grundprinzips lassen sich jedoch die Meßzeiten dann wesentlich verkürzen, wenn von den beispielsweise in etwa sinus- bis dreieckförmigen Sensoreinzelsignalverläufen nicht nur die Nulldurchgänge, sondern auch dazwischenliegende Analogwerte als Maß für die Drehgeschwindigkeitsmessung ausgewertet werden.

Entsprechend der Darstellung der Fig. 6 werden an die Verbindungspunkte der beiden, jeweils einen Sensor S1, S2 bildenden Feldplattenwiderstände FP1, FP2 bzw. FP3, FP4 mit dem Verstärkungsfaktor v behaftete Inverter-Verstärker über Eingangswiderstände von jeweils R1 angeschlossen, so daß sich an den Ausgängen der Verstärker zunächst jeweils die, auch hier wieder um eine viertel Periode zueinander versetzten Spannungen $-vU_{34}$ und $-vU_{12}$ ergeben, die entsprechend Fig. 6 auch mit $\bar{A}$ und mit $\bar{B}$

/12

19929 0203275

(= -A bzw. -B) bezeichnet sind. Durch weiter nachgeschaltete invertierende Verstärker mit jeweils einem Widerstand R im Eingang und im Rückkopplungszweig werden dann zu den Spannungsverläufen $\bar{A}$ und $\bar{B}$ (siehe bei a) in Fig. 7) noch die invertierten, also um 180$^o$ versetzten Spannungsverläufe A und B erzeugt, so daß sich die vier jeweils zueinander um eine viertel Periode oder /2 versetzten Spannungsverläufe A, B, $\bar{A}$, $\bar{B}$ ergeben.

Durch die Zwischenschaltung einer aus den Verstärkern V1, V2, V1', V2' und den zugeordneten Schaltungselementen bestehenden analogen Auswertestufe vor die gegebenenfalls gewünschte, weiterführende digitale Verarbeitung ergeben sich die v-fach verstärkten Signale A, B, $\bar{A}$, $\bar{B}$ in ihren zugeordneten Kurvenverläufen entsprechend a) der Fig. 7.

Aus diesem Gesamtkurvenverlauf A, B, $\bar{A}$, $\bar{B}$ vier zur Verfügung stehenden Signale können über eine nachgeschaltete Schaltlogik SL die bei a) in Fig. 7 verdickt dargestellten geradenähnlichen Kurventeilstücke ausgeblendet und entsprechend dem bei b) in Fig. 7 gezeigten Kurvenverlauf so aneinandergefügt werden, daß sich ein sägezahnförmiges Signal D(t) ergibt. Bei diesem sägezahnförmigen Signalverlauf D(t) stellt die digital oder analog leicht zu ermittelnde Steigung $\dot{D}$(t) - bis auf die kurzen Umschaltaugenblicke - ein gutes Maß auch für die Momentangeschwindigkeit dar, so daß man auch in der Zeit zwischen den inkrementalen Nulldurchgängen auswerten kann. Bei c) in Fig. 7 ist die Ableitung $\dot{D}$ des Sägezahnsignals über der Zeit dargestellt; die Höhe des Signals ist ein Maß für die jeweilige Geschwindigkeit bei niedrigsten Drehzahlen. Eine Anwendung der auf diese Weise gewonnen Meßwerte für die Geschwindigkeitsmessung
ergibt sich mit Vorteil beispielsweise für die Funktion von ABS-
Systemen, die auch ergänzend für die Unterdrückung des Anfahrschlupf (ASR-Regelung) eingesetzt werden können, wobei ein solcher
Regelvorgang ab der Geschwindigkeit Null wirksam sein müßte.

Ferner ergibt sich ein weiteres bevorzugtes Anwendungsgebiet
allein oder in Verbindung mit Drehwinkelmessungen durch die Möglichkeit, die jeweilige Bewegungsrichtung des Inkrementrades oder
Weggebers zu erkennen und vorzugsweise durch ein gesondertes
Signal auswertbar zu machen.

Da die Phasenverschiebung der beispielsweise entsprechend der
Darstellung der Fig. 1 und 2 gewonnenen Einzelausgangssignale
$U_{12}$ und $U_{34}$ beim Vorwärtslauf anders ist als beim Rückwärtslauf,
läßt sich dieser Unterschied zur Richtungserkennung ausnutzen. In
Fig. 8 sind die Phasenbeziehungen der erwähnten Signale über der
Zeit als Kurvenverläufe dargestellt, während die Fig. 9 eine Richtungserkennungsschaltung zeigt.

Eilt also beispielsweise beim Vorwärtslauf die Spannung $U_{34_V}$, wie
diese Spannung bei b) in Fig. 8 dargestellt ist, der Spannung $U_{12}$,
entsprechend a) in Fig. 8, um $\pi/2$ nach, so eilt sie beim Rückwärtslauf (siehe $U_{34_R}$ entsprechend c) in Fig. 8) der Spannung $U_{12}$
um $\pi/2$ vor.

Diese Phasenunterschiede können durch eine geeignete Auswerteschaltung in ein zusätzliches logisches Richtungssignal Q umgesetzt
werden.

Eine solche geeignete Auswerteschaltung ist in Fig. 9 dargestellt und umfaßt ein sogenanntes D-Flipflop, dem die Spannung $U_{12}$ als CLOCK-Signal zugeführt ist. Die Reset- und Set-Eingänge sind auf Masse gelegt; dem D-Eingang des Flipflops FF wird das in seiner Phase sich jeweils um $180^{\circ}$ (Vorwärtslauf oder Rückwärtslauf) ändernde Spannungssignal $U_{34}$ zugeführt. Daher schaltet das D-Flipflop FF mit jeder positiven Flanke des CLOCK-Signals $CL = U_{12}$ das am D-Eingang liegende Signal $D = U_{34}$ auf den Ausgang Q durch, so daß sich, wie leicht durch Vergleich der Kurvenverläufe der Fig. 8 festgestellt werden kann, beim Vorwärtslauf der Ausgang $Q = 1$ und beim Rückwärtslauf der Ausgang $Q = 0$ ergibt, wie auch bei d) in Fig. 8 gezeigt. Dieser zusätzliche Vorteil der Richtungserkennung, die die vorliegende Erfindung zu leisten imstande ist, kann beispielsweise dann von Bedeutung sein, wenn bei künftigen, weiteren Kraftfahrzeugentwicklungen beispielsweise die Radsignale nicht nur für ABS- oder ASR-Funktionen, sondern auch zur Auswertung bei Leit- und Orientierungssystemen ausgenutzt werden.

Alle in der Beschreibung, den nachfolgenden Ansprüchen und der Zeichnung dargestellten Merkmale können sowohl einzeln als auch in beliebiger Kombination miteinander erfindungswesentlich sein.

**19929**

1838/ot/mü
07.01.1985

ROBERT BOSCH GMBH, 7000 Stuttgart 1

Patentansprüche

1. Inkrementaler Weggeber, insbesondere Drehwinkelsensor hoher
   Auflösung, bei dem einem Rotor (Inkrementrad) als Geber mit
   gebrochener Umfangsstruktur ein auf die Strukturänderung mit
   einer Änderung seiner Ausgangsspannung reagierendes Sensorsystem im vorgegebenen Abstand berührungsfrei gegenüberliegt,
   dadurch gekennzeichnet, daß zur Vergrößerung des Abstands
   Sensor/Inkrementrad bei aufrechtzuerhaltender spezifischer
   Impulszahl mindestens zwei Sensorsysteme (S1, S2; S1', S2';
   S1", S2") vorgesehen sind und diese oder die der Abtastung unterworfenen jeweiligen Rotorstrukturbereiche (Z1, Z2; SZ) in
   Rotorwegrichtung um vorgegebene Beträge zueinander versetzt
   angeordnet sind, wobei die Sensorausgangsspannungen ($U_{12}$, $U_{34}$)
   über eine Gatterschaltung (G1) zu einer gemeinsamen Signalausgangsspannung (Ua) verknüpft werden.

2. Weggeber nach Anspruch 1, dadurch gekennzeichnet, daß bei
   gleichzeitiger Vergröberung der Umfangsstruktur des den Rotor

/2

bildenden Inkrementrades (R, R', R'') die beiden Sensorsysteme (S1, S2) um eine viertel Periode ihrer jeweiligen Ausgangsspannungen in Drehrichtung des Inkrementrades versetzt angeordnet sind.

3. Weggeber nach Anspruch 1, dadurch gekennzeichnet, daß die von den beiden Sensorsystemen (S1', S2'; S1'', S2'') jeweils abgetasteten Rotorstrukturbereiche so zueinander geometrisch in Umfangsdrehrichtung versetzt angeordnet sind, daß sich bei zwei vorhandenen Sensorsystemen eine Phasenverschiebung ihrer Ausgangsspannungen um eine viertel Periode ($\pi/2$) ergibt.

4. Weggeber nach einem der Ansprüche 1 bis 3, dadurch gekennzeichnet, daß jedes Sensorsystem als die Reihenschaltung von zwei Feldplatten-Widerständen (FP1, FP2; FP3, FP4) umfassender Differentialsensor ausgebildet ist, wobei die Spannungen an den Widerstandsverbindungspunkten zunächst Komparatoren (K1, K2) zur Rechteckwellenbildung und anschließend einem exklusiven ODER-Gatter zugeführt sind.

5. Weggeber nach einem oder mehreren der Ansprüche 1 bis 4 zur Drehgeschwindigkeitsmessung bei niedrigsten Drehzahlen, dadurch gekennzeichnet, daß den verstärkten Einzelausgangssignalen ($U_{12}$, $U_{34}$) der mindestens zwei Differentialsensoren (S1, S2) zur Bildung auch der entsprechend negierten Spannungsverläufe Inverter (V2, V2') nachgeschaltet sind, derart, daß sich vier, jeweils um eine viertel Periode ($\pi/2$) versetzte periodische Spannungsverläufe ergeben, mit einer Schaltlogik (SL) der diese Spannungsverläufe zugeführt sind und die so ausgebildet ist, daß

/3

1838/oť/mü
07.01.1985

die jeweils über den Nulldurchgang verlaufenden, geradenähnlichen Stücke ausgeblendet und zur Bildung eines sägezahnförmigen Signals (D(t)) zusammengefügt sind derart, daß deren Steigung ($\dot{D}$(t)) ein Maß für die Momentangeschwindigkeit bei niedrigsten Drehzahlen zwischen den Nulldurchgängen bildet.

6. Inkrementaler Weggeber nach einem oder mehreren der Ansprüche 1 bis 4 zur Richtungserkennung, dadurch gekennzeichnet, daß ein die unterschiedliche Phasenverschiebung der einzelnen Ausgangssignale ($U_{12}$, $U_{34}$) der beiden Sensorsysteme (S1, S2) verarbeitende Auswerteschaltung vorgesehen ist.

7. Weggeber nach Anspruch 6, dadurch gekennzeichnet, daß ein D-Flipflop (FF) vorgesehen ist, dem die in ihrer Phase konstante Bezugsspannung ($U_{12}$) des einen Sensorsystems (S1) als CLOCK-Signal (CL) und das in seiner Phase jeweils um $\pi/2$ diesem Signal ($U_{12}$) je nach Vorwärtslauf oder Rückwärtslauf vor- oder nachlaufende Ausgangssignal ($U_{34}$) des anderen Sensors (S2) als D-Signal zugeführt ist, derart, daß der Ausgang (Q) des D-Flipflops (FF) in der einen Drehrichtung hochliegendes und in der anderen Drehrichtung niederliegendes Signal führt.

**Fig.1**

**Fig.2**

**Fig.3**

**Fig.4**

**Fig.5**

**Fig.6**

0203275 19929

Fig.7

a)

A   B

Ā   B̄

b) D

A   B   Ā   B̄   A

c) D

Fig.8

a) U₁₂

b) U₃₄ᵥ

c) U₃₄ᵣ

d) Q

vorwärts ..."1"

rückwärts ..."0"

Fig.9

U₁₂ o————————————o Inkrement

CL

R
S

Q

Q̄

D

U₃₄ o

FF

o Inkrement